# EUROPEAN PATENT SPECIFICATION

(11) **EP 2 417 406 B1**
(45) Date of publication and mention of the grant of the patent: **06.03.2019**
(21) Application number: 10762278.9
(22) Date of filing: 06.04.2010
(51) Int. Cl.: F25B 33/00, F25B 29/00, F25B 1/10, F25B 41/00

(54) **REFRIGERANT VAPOR COMPRESSION SYSTEM WITH HOT GAS BYPASS**
KÜHLUNGSDAMPF-KOMPRESSIONSSYSTEM MIT HEISSGASUMLEITUNG
SYSTÈME DE COMPRESSION DE VAPEUR DE FRIGORIGÈNE AVEC DÉRIVATION DE GAZ CHAUD

(30) Priority: 09.04.2009 US 167972 P
(43) Date of publication of application: 15.02.2012
(73) Proprietor: Carrier Corporation, Farmington, CT 06034 (US)
(72) Inventor: SCARCELLA, Jason, Cicero NY 13039 (US); LIFSON, Alexander, Manlius NY 13104 (US); LI, Daqing, Manlius NY 13104 (US); MITRA, Biswajit, Charlotte NC 28269 (US); LIU, Lucy ,Yi, Fayetteville NY 13066 (US); DURAISAMY, Suresh, Liverpool NY 13090 (US); CHEN, Yu, H., Manlius NY 13104 (US)
(74) Representative: Dehns
(86) International application number: PCT/US2010/030025
(87) International publication number: WO 2010/117973

(56) References cited:
- EP-A1- 1 795 836
- JP-A- 2005 214 443
- US-A- 4 831 834
- US-A1- 2003 101 735
- US-A1- 2008 060 365
- US-A1- 2009 000 321
- US-B1- 6 279 331

## Description

### Field of the Invention

This invention relates generally to refrigerant vapor compression systems and, more particularly, to bypassing hot refrigerant gas around the gas cooler in a refrigerant vapor compression system operating in a transcritical cycle.

### Background of the Invention

Refrigerant vapor compression systems are well known in the art and commonly used for conditioning air to be supplied to a climate controlled comfort zone within a residence, office building, hospital, school, restaurant or other facility. Refrigerant vapor compression system are also commonly used in refrigerating air supplied to display cases, merchandisers, freezer cabinets, cold rooms or other perishable/frozen product storage areas in commercial establishments.

Refrigerant vapor compression systems are also commonly used in transport refrigeration systems for refrigerating air supplied to a temperature controlled cargo space of a truck, trailer, container or the like for transporting perishable/frozen items by truck, rail, ship or intermodal. Refrigerant vapor compression systems used in connection with transport refrigeration systems are generally subject to more stringent operating conditions due to the wide range of operating load conditions and the wide range of outdoor ambient conditions over which the refrigerant vapor compression system must operate to maintain product within the cargo space at a desired temperature. The desired temperature at which the cargo needs to be controlled can also vary over a wide range depending on the nature of cargo to be preserved. The refrigerant vapor compression system must not only have sufficient capacity to rapidly pull down the temperature of product loaded into the cargo space at ambient temperature, but also operate efficiently at low load when maintaining a stable product temperature during transport.

Traditionally, conventional refrigerant vapor compression systems commonly operate at subcritical refrigerant pressures and typically include a compressor, a condenser, and an evaporator, and expansion device, commonly an expansion valve, disposed upstream, with respect to refrigerant flow, of the evaporator and downstream of the condenser. These basic refrigerant system components are interconnected by refrigerant lines in a closed refrigerant circuit, arranged in accord with known refrigerant vapor compression cycles, and operated in the subcritical pressure range for the particular refrigerant in use. Refrigerant vapor compression systems operating in the subcritical range are commonly charged with fluorocarbon refrigerants such as, but not limited to, hydrochlorofluorocarbons (HCFCs), such as R22, and more commonly hydrofluorocarbons (HFCs), such as R134a, R410A, R404A and R407C.

In today's market, greater interest is being shown in "natural" refrigerants, such as carbon dioxide, for use in air conditioning and transport refrigeration systems instead of HFC refrigerants. However, because carbon dioxide has a low critical temperature, most refrigerant vapor compression systems charged with carbon dioxide as the refrigerant are designed for operation in the transcritical pressure regime. In refrigerant vapor compression systems operating in a subcritical cycle, both the condenser and the evaporator heat exchangers operate at refrigerant temperatures and pressures below the refrigerant's critical point. However, in refrigerant vapor compression systems operating in a transcritical cycle, the heat rejection heat exchanger, which is a gas cooler rather than a condenser, operates at a refrigerant temperature and pressure in excess of the refrigerant's critical point, while the evaporator operates at a refrigerant temperature and pressure in the subcritical range. Thus, for a refrigerant vapor compression system operating in a transcritical cycle, the difference between the refrigerant pressure within the gas cooler and refrigerant pressure within the evaporator is characteristically substantially greater than the difference between the refrigerant pressure within the condenser and the refrigerant pressure within the evaporator for a refrigerant vapor compression system operating in a subcritical cycle.

It is also common practice to incorporate an economizer into the refrigerant circuit for increasing the capacity of the refrigerant vapor compression system. In some transcritical cycle systems, a flash tank economizer is incorporated into the refrigerant circuit between the condenser and the evaporator. In such case, the refrigerant leaving the condenser is expanded through an expansion device, such as a thermostatic expansion valve or an electronic expansion valve, prior to entering the flash tank wherein the expanded refrigerant separates into a liquid refrigerant component and a vapor refrigerant component. The vapor component of the refrigerant is thence directed from the flash tank into an intermediate pressure stage of the compression process. The liquid component of the refrigerant is directed from the flash tank through the system's main expansion valve prior to entering the evaporator. U. S. Pat. No. 6,385,980 discloses a transcritical refrigerant vapor compression system incorporating a flash tank economizer in the refrigerant circuit between the gas cooler and the evaporator.

The refrigerant coils of the evaporator in a transcritical cycle transport refrigeration, as in any subcritical cycle transport refrigeration system are subject, depending upon operating conditions, to frost formation and frost build-up from moisture in the air circulating from the cargo box and passing over the refrigerant coils. Thus, it is common practice to provide electric resistance heaters in operative association with the refrigerant coils that are periodically operated to melt frost from the refrigerant coils. The electric resistance heaters can also be employed to heat the circulating air when it is desired to raise the air temperature within the cargo box to prevent over cooling of the cargo. However, electric resistance heaters increase the consumption of power, the availability of which is often limited. Electric resistance heaters and related components are also expensive and raise the initial cost and operating cost of the refrigeration unit.

U.S. Patent 7,028,494 discloses a heat pump water heating system operating in a transcritical cycle wherein to defrost the evaporator, refrigerant from the discharge of the compressor bypasses the gas cooler, passes through the evaporator expansion device, and thence through the evaporator to melt frost off the external surface of the evaporator.

US 4831834 discloses a refrigerating apparatus that repeatedly alternates between a normal refrigerating cycle and a defrost cycle, in which a hot gas produced by the compressor is directly introduced into an evaporator by way of a hot gas bypass line for periodically removing frost and ice deposited on the evaporator.

US 4831834 discloses a refrigerant vapor compression system according to the preamble of claim 1. U.S. Patent 6,279,331 discloses a method for controlling the capacity of a refrigerant vapor compression system operating in a heating mode.

### Summary of the Invention

An aspect of the invention provides a refrigerant vapor compression system comprising: a primary refrigerant circuit including a refrigerant compression device, a refrigerant heat rejection heat exchanger downstream of said compression device, a refrigerant heat absorption heat exchanger downstream of said refrigerant heat rejection heat exchanger, and a primary expansion device disposed in the refrigerant circuit downstream of said refrigerant heat rejection heat exchanger and upstream of said refrigerant heat absorption heat exchanger; a hot gas bypass line establishing refrigerant vapor flow communication between a location upstream with respect to refrigerant vapor flow of said refrigerant heat rejection heat exchanger and a location upstream with respect to refrigerant flow of said refrigeration heat absorption heat exchanger and downstream of said primary expansion device, said hot gas bypass line bypassing said refrigerant heat rejection heat exchanger and said primary expansion device; and a refrigerant vapor flow control device interdisposed in said hot gas bypass line, said refrigerant flow control device having at least a first open position in which refrigerant vapor flow may pass through said hot gas bypass line and a closed position in which refrigerant vapor flow may not pass through said hot gas bypass line, characterised in that the hot gas bypass line opens into a mid-stage of the compression device to receive refrigerant vapor from the compression device at an intermediate pressure between a compression device suction pressure and a compression device discharge pressure.

A suction modulation valve may be interdisposed in the primary refrigerant circuit downstream of said refrigerant heat absorption heat exchanger and upstream of the compression device.

In an embodiment, the refrigerant flow control device comprises a solenoid valve. In an embodiment, the hot gas bypass line opens from the mid-stage of the compression device to receive refrigerant vapor from the compression device at an intermediate pressure between a compression device suction pressure and a compression device discharge pressure. In an embodiment, the hot gas bypass line opens from the primary refrigerant circuit at a location between an inlet to the refrigerant heat rejection heat exchanger and a refrigerant vapor discharge outlet of the compression device to receive refrigerant vapor at a compression discharge pressure.

Another aspect of the invention provides a method for controlling the capacity of a refrigerant vapor compression system operating in one of a heating mode and a defrost mode, the refrigerant vapor compression system including a refrigerant circuit having a compression device, a refrigerant heat rejection heat exchanger, and a refrigerant heat absorption heat exchanger disposed in serial refrigerant flow relationship, said method comprising the steps of: bypassing refrigerant vapor through a bypass line from a location upstream of the refrigerant heat rejection heat exchanger directly to the refrigerant heat absorption heat exchanger, wherein the bypass line opens into a mid-stage of the compression device to receive refrigerant vapor from the compression device at an intermediate pressure between a compression device suction pressure and a compression device discharge pressure; disposing a refrigerant vapor flow control device in the bypass line; disposing a suction modulation valve in a refrigerant line connecting a refrigerant outlet of the refrigerant heat absorption heat exchanger in refrigerant flow communication with a suction inlet of the compression device; selectively modulating the flow of refrigerant vapor through the refrigerant flow control device; and selectively modulating the flow of refrigerant through the suction modulation valve.

The method may also include the steps of: sensing a compressor discharge refrigerant pressure; selectively modulating the flow of refrigerant vapor through the refrigerant flow control device in response to the sensed compressor discharged refrigerant pressure; and selectively modulating the flow of refrigerant through the suction modulation valve to control refrigerant mass flow.

### Brief Description of the Drawings

For a further understanding of the disclosure, reference will be made to the following detailed description which is to be read in connection with the accompanying drawing, where:
FIG. 1 is a schematic diagram illustrating an exemplary embodiment of a refrigerant vapor compression system in accord with the invention; and
FIG. 2 is a graph illustrating the variation of refrigerant pressure with enthalpy over the compression cycle.

### Detailed Description of the Invention

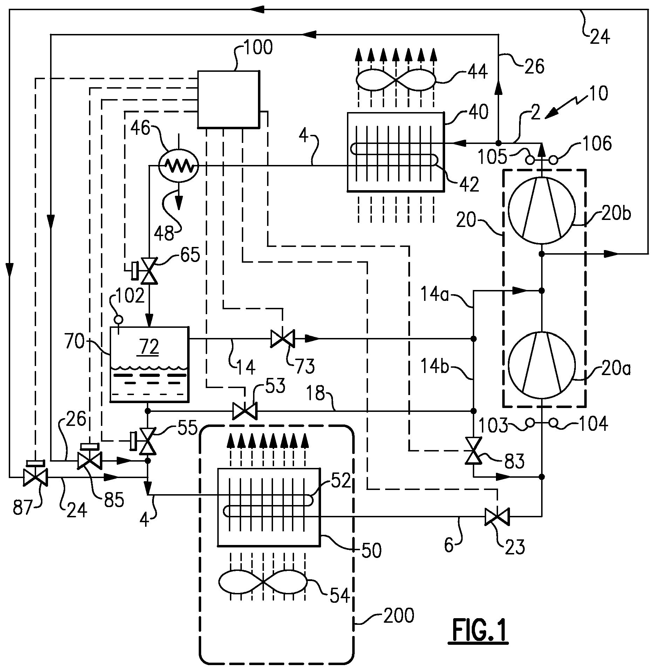

Referring now to FIG. 1, there are depicted therein exemplary embodiments of a refrigerant vapor compression system 10 suitable for use in a transport refrigeration system for refrigerating the air or other gaseous atmosphere within the temperature controlled cargo space of a truck, trailer, container or the like for transporting perishable/frozen goods. The refrigerant vapor compression system 10 is also suitable for use in conditioning air to be supplied to a climate controlled comfort zone within a residence, office building, hospital, school, restaurant or other facility. The refrigerant vapor compression system could also be employed in refrigerating air supplied to display cases, merchandisers, freezer cabinets, cold rooms or other perishable/frozen product storage areas in commercial establishments.

The refrigerant vapor compression system 10 is particularly adapted for operation in a transcritical cycle with a low critical temperature refrigerant, such as for example, but not limited to, carbon dioxide. However, it is to be understood that the refrigerant vapor compression system 10 may also be operated in a subcritical cycle with a higher critical temperature refrigerant such as conventional hydrochlorofluorocarbon and hydrofluorocarbon refrigerants. The refrigerant vapor compression system 10 includes a multi-step compression device 20, a refrigerant heat rejecting heat exchanger 40, a refrigerant heat absorbing heat exchanger 50, also referred to herein as an evaporator, and a primary expansion valve 55, such as for example an electronic expansion valve or a thermostatic expansion valve, operatively associated with the evaporator 50, with refrigerant lines 2, 4 and 6 connecting the aforementioned components in a primary refrigerant circuit as illustrated in FIG. 1. A suction modulation valve (SMV) 23 may be interdisposed in refrigerant line 6 intermediate the outlet of the evaporator 50 and the suction inlet to the compression device 20. In the exemplary embodiments depicted in drawings, the suction modulation valve 23 is positioned in refrigerant line 6 between the outlet of the evaporator 50 and the point at which the compressor unload bypass line 16 intersects refrigerant line 6.

In a refrigerant vapor compression system operating in a transcritical cycle, the refrigerant heat rejecting heat exchanger 40 constitutes a gas cooler through which supercritical refrigerant passes in heat exchange relationship with a cooling medium, such as for example, but not limited to ambient air or water, and may be also be referred to herein as a gas cooler. In the depicted embodiments, the refrigerant heat rejecting heat exchanger 40 includes a finned tube heat exchanger 42, such as for example a fin and round tube heat exchange coil or a fin and mini-channel flat tube heat exchanger, through which the refrigerant passes in heat exchange relationship with ambient air or other cooling media being drawn through the finned tube heat exchanger 42 by the fan(s) 44 associated with the gas cooler 40. The transcritical cycle refrigerant vapor compression system may optionally include a water cooled condenser 46 disposed in refrigerant line 4 downstream with respect to refrigerant flow of the gas cooler 40, such as depicted in FIG. 1. In such case, the high pressure refrigerant gas having traversed the gas cooler 40 passes through the water cooled condenser 46, wherein the refrigerant gas is further cooled as it passes in heat exchange relationship with cooling water 48 to further cool the refrigerant gas and, depending upon operating conditions, a portion of the refrigerant gas to a refrigerant liquid may be condensed.

The refrigerant heat absorption heat exchanger 50 serves an evaporator wherein refrigerant liquid is passed in heat exchange relationship with a fluid to be cooled, most commonly air, drawn from and to be returned to a temperature controlled environment 200, such as the cargo box of a refrigerated transport truck, trailer or container, or a display case, merchandiser, freezer cabinet, cold room or other perishable/frozen product storage area in a commercial establishment, or to a climate controlled comfort zone within a residence, office building, hospital, school, restaurant or other facility. In the depicted embodiments, the refrigerant heat absorbing heat exchanger 50 comprises a finned tube heat exchanger 52 through which refrigerant passes in heat exchange relationship with air drawn from and returned to the refrigerated cargo box 200 by the evaporator fan(s) 54 associated with the evaporator 50. The finned tube heat exchanger 52 may comprise, for example, a fin and round tube heat exchange coil or a fin and mini-channel flat tube heat exchanger.

The compression device 20 functions to compress the refrigerant and to circulate refrigerant through the primary refrigerant circuit as will be discussed in further detail hereinafter. The compression device 20 may comprise a single multiple stage refrigerant compressor, such as for example a screw compressor or a reciprocating compressor, disposed in the primary refrigerant circuit and having a first compression stage 20a and a second compression stage 20b. The first and second compression stages are disposed in series refrigerant flow relationship with the refrigerant leaving the first compression stage passing directly to the second compression stage for further compression. Also, the compression device 20 may comprise a single compression device, such as a scroll compressor, having a compression chamber having one or more ports opening directly into the compression chamber at an intermediate pressure stage of the compression chamber through which refrigerant may be injected into or withdrawn from the compression chamber. Alternatively, the compression device 20 may comprise a pair of independent compressors 20a and 20b, connected in series refrigerant flow relationship in the primary refrigerant circuit via a refrigerant line connecting the discharge outlet port of the first compressor 20a in refrigerant flow communication with the suction inlet port of the second compressor 20b. In the independent compressor embodiment, the compressors 20a and 20b may be scroll compressors, screw compressors, reciprocating compressors, rotary compressors or any other type of compressor or a combination of any such compressors.

Additionally, the transcritical cycle refrigerant vapor compression system 10 includes a flash tank economizer 70 interdisposed in refrigerant line 4 of the primary refrigerant circuit upstream with respect to refrigerant flow of the evaporator 50 and downstream with respect to refrigerant flow of the gas cooler 40 and, if present, downstream of the condenser 46. A secondary expansion device 65 is interdisposed in refrigerant line 4 in operative association with and upstream of the flash tank economizer 70. The secondary expansion device 65 may be an electronic expansion valve, such as depicted in FIG. 1, or a fixed orifice expansion device. Refrigerant traversing the secondary expansion device 65 is expanded to a lower pressure sufficient to establish a mixture of refrigerant in a vapor state and refrigerant in a liquid state. The flash tank economizer 70 defines a separation chamber 72 wherein refrigerant in the liquid state collects in a lower portion of the separation chamber and refrigerant in the vapor state collects in the portion of the separation chamber 72 above the liquid refrigerant. The flash tank economizer 70 also functions as a refrigerant charge tank with the separation chamber providing a reservoir for collecting excess refrigerant.

Liquid refrigerant collecting in the lower portion of the flash tank economizer 70 passes therefrom through refrigerant line 4 and traverses the primary expansion valve 55, which is interdisposed in refrigerant line 4 upstream with respect to refrigerant flow of the evaporator 50. As this liquid refrigerant traverses the primary expansion device 55, it expands to a lower pressure and temperature before entering enters the evaporator 50. The evaporator 50 constitutes a refrigerant evaporating heat exchanger through which expanded refrigerant passes in heat exchange relationship with the air to be cooled, whereby the refrigerant is vaporized and typically superheated. As in conventional practice, the primary expansion valve 55 meters the refrigerant flow through the refrigerant line 4 to maintain a desired level of superheat in the refrigerant vapor leaving the evaporator 50 to ensure that no liquid is present in the refrigerant leaving the evaporator. The low pressure refrigerant vapor leaving the evaporator 50 returns through refrigerant line 6 to the suction port of the first compression stage or first compressor 20a of the compression device 20.

The refrigerant vapor compression system 10 may also include a refrigerant vapor injection line 14 and a refrigerant liquid injection line 18. The refrigerant vapor injection line 14 establishes refrigerant flow communication between an upper portion of the separation chamber 72 of the flash tank economizer 70 and an intermediate stage of the compression process through branch 14a and a suction pressure portion of the refrigerant circuit through branch 14b. The refrigerant liquid injection line 18 establishes refrigerant flow communication between a lower portion of the separation chamber 72 of the flash tank 70, typically by tapping refrigerant line 4 downstream of the flash tank 70 and upstream of the primary expansion valve 55, and discharging into an intermediate stage of the compression process through a portion of branch 14 b of refrigerant vapor injection line 14 and thence branch 14a of refrigerant vapor injection line 14. In an alternate embodiment, the refrigerant liquid injection line 18 may open directly into and discharge into refrigerant line 6 of the primary refrigerant circuit at a location downstream with respect to refrigerant flow of the suction modulation valve 23 and upstream with respect to refrigerant flow of the suction inlet to the first compressor 20a.

In the depicted exemplary embodiments of the transcritical cycle refrigerant vapor compression system 10, injection of refrigerant vapor or refrigeration liquid into the intermediate pressure stage of the compression process would be accomplished by injection of the refrigerant vapor or refrigerant liquid into the refrigerant passing from the first compression stage 20a into the second compression stage 20b of a single compressor or passing from the discharge outlet of the first compressor 20a to the suction inlet of the second compressor 20b. If the compression device 20 of the refrigerant vapor compression system 10 were a single scroll compressor, injection of refrigerant vapor or refrigerant liquid into the intermediate pressure stage of the compression process would be accomplished by injection of the refrigerant vapor or the refrigerant liquid through a port opening into the intermediate pressure port of the compression chamber of the scroll compressor.

The refrigerant vapor compression system 10 may also include a compressor unload bypass line, which in the depicted embodiment is made up of refrigerant branch lines 14a and 14b, that establishes refrigerant flow communication via flow control device 83, between an intermediate pressure stage of the compression device 20 and the suction pressure portion of the refrigerant circuit, which as noted previously constitutes refrigerant line 6 extending between the outlet of the evaporator 50 and the suction inlet of the compression device 20. The refrigerant vapor compression system 10 may also include an economizer vapor injection bypass line 14b that establishes refrigerant flow communication between the refrigerant vapor injection line 14, from a location downstream with respect to refrigerant flow of the flash tank 70 and upstream with respect to refrigerant flow of the injection site to intermediate pressure stage of the compression device 20, and the suction pressure portion of refrigerant line 6 of the refrigerant circuit.

The refrigerant vapor compression system 10 may, as depicted in FIG. 1, include a control system operatively associated with the compression device and other components of the system, including but not limited to the fans 44 and 54. In an embodiment of the refrigerant vapor compression system 10, the control system includes a controller 100 and a plurality of flow control devices operatively associated with the various refrigerant lines. In operation, the controller 100 selectively controls the positioning of each of the plurality of flow control devices between its respective open and closed positions to selectively direct refrigerant flow through the various refrigerant lines.

The flow control devices, in addition to the suction modulation valve 23, may include, without limitation, a first flow control device 73 interdisposed in a downstream portion of refrigerant vapor injection line 14, a second flow control device 53 interdisposed in an upstream portion of refrigerant liquid injection line 18, and a third flow control device 83 interdisposed in refrigerant branch line 14b. Each of the aforementioned flow control devices 53, 73, 83 may comprise a flow control valve selectively positionable between an open position wherein refrigerant flow may pass through the refrigerant line in which the flow control valve is interdisposed and a closed position wherein refrigerant flow is blocked through the refrigerant line in which the flow control valve is interdisposed. In an embodiment, each of the flow control valves 53, 73, 83 comprises a two-position solenoid valve of the type positionable selectively positionable under the control of the controller 100 between a first open position and a second closed position. In an embodiment, the suction modulation flow control valve 23 comprises a flow control valve having at least one partially open position between a fully closed position and a fully open position, such as for example an electronic stepper valve or a pulse width modulated solenoid valve.

The controller 100 not only controls operation of the various flow control valves 23, 53, 73, 83 to selectively direct refrigerant flow through the respective refrigerant lines in which the valves are interdisposed, but also may control operation of the electronic expansion valves 55 and 65, the compression device 20, and the fans 44 and 54. As in conventional practice, in addition to monitoring ambient conditions, the controller 100 may also monitor various operating parameters by means of various sensors operatively associated with the controller 100 and disposed at selected locations throughout the system. For example, in the exemplary embodiments depicted in FIG. 1, a pressure sensor 102 is disposed in operative association with the flash tank 70 to sense the pressure within the flash tank 70, a temperature sensor 103 and a pressure sensor 104 are provided to sense the refrigerant suction temperature and pressure, respectively, and a temperature sensor 105 and a pressure sensor 106 are provided to sense refrigerant discharge temperature and pressure, respectively. The pressure sensors 102, 104, 106 may be conventional pressure sensors, such as for example, pressure transducers, and the temperature sensors 103 and 105 may be conventional temperature sensors, such as for example, thermocouples or thermistors.

The refrigerant vapor compression system 10 may include either a mid-stage hot gas bypass line 24 or a discharge hot gas bypass line 26 or both. The mid-stage hot gas byline 24 establishes refrigerant flow communication between an intermediate pressure compression stage of the compression device 20 and refrigerant line 4 of the primary refrigerant circuit downstream of the flash tank 70. In the exemplary embodiment depicted in FIG. 1, the mid-stage hot gas bypass line 24 opens into the compression device 20 at a point between the refrigerant outlet of the first compression stage 20a and the refrigerant inlet to the second compression stage 20b to receive intermediate pressure, hot refrigerant vapor and opens into refrigerant line 4 of the primary refrigerant circuit at a location upstream of the evaporator 50 and downstream with respect to refrigerant flow through refrigerant line 4 of the primary expansion device 55 to discharge the intermediate pressure, hot gas into refrigerant line 4 upstream of the refrigerant coil 52 of the evaporator.

Additionally, a flow control device 87 is interdisposed into the mid-stage hot gas bypass line 24. The flow control device 87 is operated by the controller 100 to selectively open the mid-stage hot gas bypass line 24 to refrigerant vapor flow therethrough when it is desired to operate the refrigerant vapor compression system 10 in a defrost mode and close the mid-stage hot gas bypass line 24 to refrigerant vapor flow therethrough whenever the refrigerant vapor compression system 10 is not operating in a defrost mode. In an embodiment, the flow control device 87 may comprise a solenoid valve that is selectively positionable in either a fully open position or a fully closed position or, in addition thereto, at least one partially open position between a fully closed position and a fully open position, such as for example an electronic stepper valve or a pulse width modulated solenoid valve. When the flow control device 87 is positioned in the open position, refrigerant vapor will flow from the compression device 20 through the mid-stage hot gas bypass line 24 directly to and through the evaporator coil 52 to melt any frost deposited on the external surface of the refrigeration coil 52. In the defrost mode, the controller 100 will turn the power to the evaporator fan(s) 54 off to stop the circulation of air from the cargo box 200 through the evaporator 50 to eliminate an unintended rise in air temperature within the cargo box 200.

The hot gas bypass line 26 establishes refrigerant flow communication between a discharge outlet of the second compression stage 20b of the compression device 20 and refrigerant line 4 of the primary refrigerant circuit downstream of the flash tank 70. In the exemplary embodiment depicted in FIG. 1, the hot gas bypass line 26 opens into the refrigerant line 2 of the primary refrigerant circuit at a point between the refrigerant inlet to the gas cooler 40 and the refrigerant vapor discharge outlet of the second compression stage 20b to receive high pressure, hot refrigerant vapor and opens into refrigerant line 4 of the primary refrigerant circuit at a location upstream of the evaporator 50 and downstream with respect to refrigerant flow through refrigerant line 4 of the primary expansion device 55 to discharge the hot gas into refrigerant line 4 upstream of the refrigerant coil 52 of the evaporator.

Additionally, a flow control device 85 is interdisposed into the hot gas bypass line 26. In the embodiment depicted in FIG. 1, the flow control device 85 is a open/closed flow control device operated by the controller 100 to selectively open the hot gas bypass line 26 to refrigerant vapor flow therethrough when it is desired to operate the refrigerant vapor compression system 10 in a defrost mode and close the hot gas bypass line 26 to refrigerant vapor flow therethrough whenever the refrigerant vapor compression system 10 is not operating in a defrost mode. In this embodiment, the flow control device 85 may comprise a solenoid valve that is selectively positionable in either a fully open position or a fully closed position or, in addition thereto, at least one partially open position between a fully closed position and a fully open position, such as for example an electronic stepper valve or a pulse width modulated solenoid valve. When the flow control device 85 is positioned in the open position, refrigerant vapor will flow from the compression device 20 through the hot gas bypass line 26 directly to and through the evaporator coil 52 to melt any frost deposited on the external surface of the refrigeration coil 52. In the defrost mode, the controller 100 will turn the power to the evaporator fan(s) 54 off to stop the circulation of air from the cargo box 200 through the evaporator 50 to eliminate an unintended rise in air temperature within the cargo box 200.

Whenever it is necessary to defrost the evaporator heat exchange surface, the controller 100 will close each of the valves 53, 73, 83 as well as the electronic expansion valves 55 and 65, and either open the flow control valve 87 to permit the flow of high pressure, hot refrigerant vapor from the discharge outlet of the compression device 20 to flow through the hot gas bypass line 24 into and through the evaporator coil 52, or open the mid-stage flow control valve 85 to permit the flow of intermediate pressure, intermediate temperature hot refrigerant vapor from an intermediate pressure stage of the compression device 20 to flow through the mid-stage hot gas bypass line 26 into and through the evaporator coil 52. As the refrigerant vapor passes through the refrigerant passages of the evaporator 50, the frost formed on the evaporator heat exchange surface is melted. In the defrost mode, the controller 100 will also turn the power to the evaporator fan(s) 54 off to stop the circulation of air from the cargo box 200 through the evaporator 50 to eliminate an unintended rise in air temperature within the cargo box 200.

Additionally, whenever it is desired to heat the air returning from the cargo box 200, for example in the event of an ambient outdoor temperature that is lower than the desired cargo box air temperature to be maintained, the controller 100 will close each of the valves 53, 73, 83 as well as the electronic expansion valves 55 and 65, and either open the flow control valve 87 to permit the flow of high pressure, hot refrigerant vapor from the discharge outlet of the compression device 20 to flow through the hot gas bypass line 24 into and through the evaporator coil 52, or open the mid-stage flow control valve 85 to permit the flow of intermediate pressure, intermediate temperature hot refrigerant vapor from an intermediate pressure stage of the compression device 20 to flow through the mid-stage hot gas bypass line 26 into and through the evaporator coil 52. In the heating mode, however, the evaporator fan(s) 54 remain in operation to circulate air from the cargo box 200 through the evaporator 50 in heat exchange relationship with the hot refrigerant vapor passing through the evaporator coil 52. Thus, as the hot refrigerant vapor passes through the refrigerant passages of the evaporator 50, the air returning from the cargo space 200 is heated and supplied by the evaporator fan 54 back to the cargo space 200.

In an embodiment, one or both of the refrigerant flow control devices 85 disposed in the hot gas bypass line 26 and the refrigerant flow control device 87 disposed in the mid-stage hot gas bypass line 24 may be an electronic expansion valve. In this embodiment, the heating capacity of a refrigeration system during operation in a heating or defrosting mode may be relatively precisely controlled by regulating the hot gas bypass valve downstream of the compressor along with modulating the suction modulation valve upstream of the compressor. In this embodiment, during the heating mode and also during the defrost mode, the controller 100 will close each of the valves 53, 73, 83 as well as the electronic expansion valves 55 and 65, and then modulate the opening of the expansion valve 85, 87 and also modulate the opening of the of the suction modulation valve 23, to control the heating capacity of the refrigerant vapor compression system 10. As noted previously, the pressure and temperature of the hot refrigerant vapor decrease as it traverses the expansion valve 85, 87. The pressure of the refrigerant vapor leaving the evaporator coil 52 is further reduced to a desired suction pressure as the refrigerant flow is throttled in traversing the suction modulation valve 23 disposed in refrigerant line 6. The magnitude of each pressure drop may be independently controlled by modulating the opening of the respective one of the expansion valve 85 or the suction modulation valve 23. In a method of practice, the degree of opening of the expansion valve 85, 87 is modulated in response to the sensed compressor discharged refrigerant pressure to control the compressor discharge refrigerant pressure and the degree of opening of the SMV 23 is modulated to control refrigerant mass flow.

If heating or defrosting capacity needs to be increased, the controller 100 will increase the opening of the expansion valve 85, 87 to raise the pressure and temperature of the refrigerant vapor passing through the evaporator coil 52 and also further reduce the opening of the suction modulation valve 23 to provide greater throttling, as necessary, to keep the pressure of the refrigerant vapor entering the compression device 20 from the refrigerant line 6 at the desired suction pressure. Conversely, if heating or defrosting capacity needs to be decreased, the controller 100 will decrease the opening of the expansion valve 85, 87 to lower the pressure and temperature of the refrigerant vapor passing through the evaporator coil 52 and also further increase the opening of the suction modulation valve 23 to provide lesser throttling, as necessary, to keep the pressure of the refrigerant vapor entering the compression device 20 from the refrigerant line 6 at the desired suction pressure.

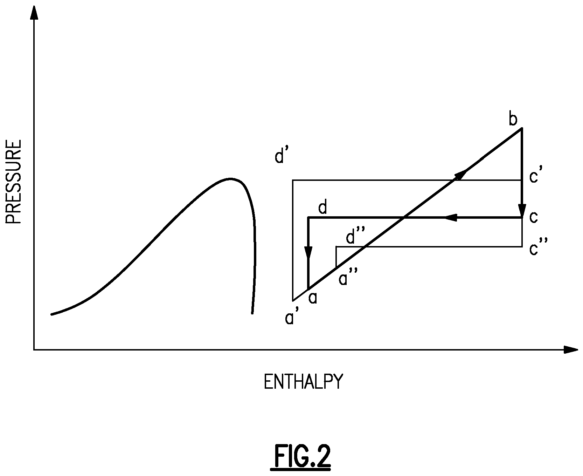

With the valves 53, 73, 83, as well as the electronic expansion valves 55 and 65, being closed, the compressor discharge pressure is determined by the amount of charge in the active part of the system 10, that is the amount of refrigerant passing through the evaporator 50 during the heating mode or the defrost mode. Referring now to FIG. 2, a pressure-to-enthalpy diagram is depicted for a transport refrigeration system operating in a transcritical cycle with carbon dioxide as the refrigerant. The refrigerant vapor enters the compression device 20 at point a, and discharges from the compression device as a hot, high pressure vapor at point b. After traversing the hot gas expansion valve 85, refrigeration vapor pressure lowers to point c and the refrigerant vapor enters evaporator 50. At the exit of evaporator 50, refrigerant state is at point d before throttling down to point a by SMV. If heating or defrosting capacity need to be increased, the controller 100 will open up the expansion valve 85 to raise evaporating pressure from cd to c'd'. Thus, since refrigerant temperature increases with higher pressure, this results in a higher temperature difference between refrigerant and air. Therefore, higher heating capacity can be expected. If heating or defrosting capacity need to be decreased, the controller 100 will reduce the opening through the expansion valve to decrease evaporating pressure from cd to c"d". Thus, since refrigerant temperature is decreased with lower pressure, this results in a lower temperature difference between refrigerant and air. Therefore, lower heating or defrosting capacity can be expected. The heating or defrosting capacity can hence be modified such that the point d (d' or d") is at the optimal point away from the dome (i.e., in the vapor region, with a desired superheat range).

In the exemplary embodiment of the refrigerant vapor compression system 10 described and depicted herein, the system includes both a mid-stage pressure hot gas bypass line 24 and a discharge pressure hot gas bypass line 26. It is to be understood, that the system may be operated in the heating mode or defrost mode selectively with only the mid-stage pressure hot gas bypass line 24 open, or with only the discharge pressure hot gas bypass line 26 open, or with both hot gas bypass lines 24 and 26 open simultaneously, as desired. Further, it is to be understood that in other embodiments, the refrigerant vapor compression system 10 may include only one of the hot gas bypass lines 24 and 26, as desired, rather than both hot gas bypass lines.

As noted previously, when operating in the heating mode or the defrost mode, typically, each of the flow control valves 53, 73, 83 and the expansion valves 55 and 65 is closed and system capacity is controlled by modulating whichever of valves 85 and 87 that is then active. However, it is to be understood that in some instances it may be desirable to adjust the refrigerant charge circulating through the active part of the system by selectively opening one of the flow control valve 53 or the expansion valve 65. For example, during operation in the heating or defrost mode, if the refrigerant temperature at the discharge outlet of the compression device 20, i.e. the compressor discharge temperature, exceeds a preselected upper limit temperature, then the controller 100 may open the flow control valve 53 in the refrigerant liquid injection line 18 to allow refrigerant liquid to drain from the reservoir 72 of the flash tank 70 back into the primary refrigerant circuit, thereby increasing the amount of refrigerant charge in the active portion of the primary refrigerant circuit. As another example, during operation in the heating or defrost mode, if the refrigerant pressure at the discharge outlet of the compression device 20, i.e. the compressor discharge pressure, is still too high in spite of the opening of the controller 100 whichever of valves 85 and 87 that is then active, then the controller 100 may open the expansion valve 65 to allow refrigerant to pass from refrigerant line 4 of the primary refrigerant circuit into the flash tank 70 to collect in the reservoir 72, thereby reducing the amount of refrigerant charge in the active portion of the primary refrigerant circuit.

Those skilled in the art will recognize that many variations may be made to the particular exemplary embodiments described herein. For example, the refrigerant vapor compression system may also be operated in a subcritical cycle, rather than in a transcritical cycle as described hereinbefore. While the present invention has been particularly shown and described with reference to the exemplary embodiments as illustrated in the drawings, it will be understood by one skilled in the art that various changes in detail may be effected therein without departing from the spirit and scope of the invention as defined by the claims.

## Claims

1. A refrigerant vapor compression system comprising:
a primary refrigerant circuit including a refrigerant compression device (20), a refrigerant heat rejection heat exchanger (40) downstream of said compression device, a refrigerant heat absorption heat exchanger (50) downstream of said refrigerant heat rejection heat exchanger, and a primary expansion device (55) disposed in the refrigerant circuit downstream of said refrigerant heat rejection heat exchanger and upstream of said refrigerant heat absorption heat exchanger;
a hot gas bypass line (24) establishing refrigerant vapor flow communication between a location upstream with respect to refrigerant vapor flow of said refrigerant heat rejection heat exchanger and a location upstream with respect to refrigerant flow of said refrigeration heat absorption heat exchanger and downstream of said primary expansion device, said hot gas bypass line bypassing said refrigerant heat rejection heat exchanger and said primary expansion device; and
a refrigerant vapor flow control device (87) interdisposed in said hot gas bypass line, said refrigerant flow control device having at least a first open position in which refrigerant vapor flow may pass through said hot gas bypass line and a closed position in which refrigerant vapor flow may not pass through said hot gas bypass line,
**characterised in that** the hot gas bypass line (24) opens into a mid-stage of the compression device (20) to receive refrigerant vapor from the compression device at an intermediate pressure between a compression device suction pressure and a compression device discharge pressure.

2. The refrigerant vapor compression system as recited in claim 1 wherein said refrigerant flow control device (87) comprises a solenoid valve.

3. The refrigerant vapor compression system as recited in claim 1 wherein said refrigerant flow control device (87) comprises an expansion valve.

4. The refrigerant vapor compression system as recited in claim 1 further comprising a suction modulation valve (23) interdisposed in said refrigerant circuit downstream of said refrigerant heat absorption heat exchanger (50) and upstream of the compression device.

5. The refrigerant vapor compression system as recited in claim 1 wherein said system operates in a transcritical cycle.

6. The refrigerant vapor compression system as recited in claim 1 wherein the refrigerant comprises carbon dioxide.

7. The refrigerant vapor compression system as recited in claim 1 wherein the mid-stage is located between a first independent compression stage (20a) and a second independent compression stage (20b).

8. The refrigerant vapor compression system as recited in claim 1 further comprising a controller (100) for modulating said refrigerant vapor flow control device (87) to selectively vary the opening of a flow passage through said refrigeration vapor flow control device when operating said refrigerant vapor compression system in one of a heating mode or a defrost mode.

9. The refrigerant vapor compression system as recited in claim 8 wherein said controller modulates said refrigerant vapor flow control device (87) to selectively vary the opening of a flow passage through said refrigeration vapor flow control device in response to a sensed compressor discharge refrigerant temperature.

10. A method for controlling the capacity of a refrigerant vapor compression system operating in one of a heating mode and a defrost mode, the refrigerant vapor compression system including a refrigerant circuit having a compression device (20), a refrigerant heat rejection heat exchanger (40), and a refrigerant heat absorption heat exchanger (50) disposed in serial refrigerant flow relationship, said method comprising the steps of:
bypassing refrigerant vapor through a bypass line (24) from a location upstream of the refrigerant heat rejection heat exchanger directly to the refrigerant heat absorption heat exchanger, wherein the bypass line (24) opens into a mid-stage of the compression device to receive refrigerant vapor from the compression device at an intermediate pressure between a compression device suction pressure and a compression device discharge pressure;
disposing a refrigerant vapor flow control device (87) in the bypass line;
disposing a suction modulation valve (23) in a refrigerant line connecting a refrigerant outlet of the refrigerant heat absorption heat exchanger in refrigerant flow communication with a suction inlet of the compression device;
selectively modulating the flow of refrigerant vapor through the refrigerant flow control device; and
selectively modulating the flow of refrigerant through the suction modulation valve.

11. The method as recited in claim 10 further comprising the steps of:
sensing a compressor discharge refrigerant pressure;
selectively modulating the flow of refrigerant vapor through the refrigerant flow control device in response to the sensed compressor discharged refrigerant pressure; and
selectively modulating the flow of refrigerant through the suction modulation valve (23) to control refrigerant mass flow.

## Patentansprüche

1. Kühlungsdampfkompressionssystem, Folgendes umfassend:
einen primären Kühlungskreislauf, der eine Kühlungskompressionsvorrichtung (20), einen Kühlungswärmeabgabe-Wärmetauscher (40) stromabwärts der Kompressionsvorrichtung, einen Kühlungswärmeaufnahme-Wärmetauscher (50) stromabwärts des Kühlungswärmeabgabe-Wärmetauschers und eine primäre Expansionsvorrichtung (55) beinhaltet, die in dem Kühlungskreislauf stromabwärts des Kühlungswärmeabgabe-Wärmetauschers und stromaufwärts des Kühlungswärmeaufnahme-Wärmetauschers angeordnet ist;
eine Heißgasumleitungsleitung (24) stromabwärts der primären Expansionsvorrichtung, die eine Kühlungsdampfströmungsverbindung zwischen einer Stelle stromaufwärts in Bezug auf Kühlungsdampfströmung des Kühlungswärmeabgabe-Wärmetauschers und einer Stelle stromaufwärts in Bezug auf Kühlungsströmung des Kühlungswärmeaufnahme-Wärmetauschers herstellt, wobei die Heißgasumleitungsleitung den Kühlungswärmeabgabe-Wärmetauscher und die primäre Expansionsvorrichtung umgeht; und
eine Kühlungsdampfströmungssteuervorrichtung (87), die in der Heißgasumleitungsleitung zwischenangeordnet ist, wobei die Kühlungsdampfströmungssteuervorrichtung mindestens eine erste offene Position, in welcher Kühlungsdampfströmung durch die Heißgasumleitungsleitung laufen kann, und eine geschlossene Position aufweist, in welcher Kühlungsdampfströmung nicht durch die Heißgasumleitungsleitung laufen kann,
**dadurch gekennzeichnet, dass** sich die Heißgasumleitungsleitung (24) in einer Mittelstufe der Kompressionsvorrichtung (20) öffnet, um Kühlungsdampf von der Kompressionsvorrichtung bei einem mittleren Druck zwischen einem Kompressionsvorrichtungssaugdruck und einem Kompressionsvorrichtungsentladedruck aufzunehmen.

2. Kühlungsdampfkompressionssystem nach Anspruch 1, wobei die Kühlungsströmungssteuervorrichtung (87) ein Magnetventil umfasst.

3. Kühlungsdampfkompressionssystem nach Anspruch 1, wobei die Kühlungsströmungssteuervorrichtung (87) ein Expansionsventil umfasst.

4. Kühlungsdampfkompressionssystem nach Anspruch 1, ferner ein Saugmodulationsventil (23) umfassend, das in dem Kühlungskreislauf stromabwärts des Kühlungswärmeaufnahme-Wärmetauschers (50) und stromaufwärts der Kompressionsvorrichtung zwischenangeordnet ist.

5. Kühlungsdampfkompressionssystem nach Anspruch 1, wobei das System in einem transkritischen Zyklus betrieben wird.

6. Kühlungsdampfkompressionssystem nach Anspruch 1, wobei die Kühlung Kohlenstoffdioxid umfasst.

7. Kühlungsdampfkompressionssystem nach Anspruch 1, wobei die Mittelstufe sich zwischen einer ersten unabhängigen Kompressionsstufe (20a) und einer zweiten unabhängigen Kompressionsstufe (20b) befindet.

8. Kühlungsdampfkompressionssystem nach Anspruch 1, ferner eine Steuerung (100) zum Modulieren der Kühlungsdampfströmungssteuervorrichtung (87) umfassend, um die Öffnung eines Strömungsdurchlasses durch die Kühlungsdampfströmungssteuervorrichtung selektiv zu variieren, wenn das Kühlungsdampfkompressionssystem in einem von einem Heizmodus oder einem Entfrostungsmodus betrieben wird.

9. Kühlungsdampfkompressionssystem nach Anspruch 8, wobei die Steuerung die Kühlungsdampfströmungssteuervorrichtung (87) moduliert, um die Öffnung eines Strömungsdurchlasses durch die Kühlungsdampfströmungssteuervorrichtung als Reaktion auf eine erkannte Kompressorentladekühlungstemperatur selektiv zu variieren.

10. Verfahren zum Steuern der Kapazität eines Kühlungsdampfkompressionssystems, das in einem von einem Heizmodus oder einem Entfrostungsmodus betrieben wird, wobei das Kühlungsdampfkompressionssystem einen Kühlungskreislauf, der eine Kompressionsvorrichtung (20) aufweist, einen Kühlungswärmeabgabe-Wärmetauscher (40) und einen Kühlungswärmeaufnahme-Wärmetauscher (50) beinhaltet, die in serieller Kühlungsströmungsbeziehung angeordnet sind, wobei das Verfahren die folgenden Schritte umfasst:
Umleiten von Kühlungsdampf durch eine Umleitungsleitung (24) von einer Stelle stromaufwärts des Kühlungswärmeabgabe-Wärmetauschers direkt zu dem Kühlungswärmeaufnahme-Wärmetauscher, wobei die Umleitungsleitung (24) sich in einer Mittelstufe der Kompressionsvorrichtung öffnet, um Kühlungsdampf von der Kompressionsvorrichtung bei einem mittleren Druck zwischen einem Kompressionsvorrichtungssaugdruck und einem Kompressionsvorrichtungsentladedruck aufzunehmen;
Anordnen einer Kühlungsdampfströmungssteuervorrichtung (87) in der Umleitungsleitung;
Anordnen eines Saugmodulationsventils (23) in einer Kühlungsleitung, die einen Kühlungsauslass des Kühlungswärmeaufnahme-Wärmetauschers in Kühlungsströmungsverbindung mit einem Saugeinlass der Kompressionsvorrichtung verbindet;
selektives Modulieren der Strömung des Kühlungsdampfes durch die Kühlungsströmungssteuervorrichtung; und
selektives Modulieren der Kühlungsströmung durch das Saugmodulationsventil.

11. Verfahren nach Anspruch 10, ferner die folgenden Schritte umfassend:
Erkennen eines Kompressorentladungskühlungsdrucks;
selektives Modulieren der Strömung des Kühlungsdampfes durch die Kühlungsströmungssteuervorrichtung als Reaktion auf den erkannten Kompressorentladungskühlungsdruck; und
selektives Modulieren der Kühlungsströmung durch das Saugmodulationsventil (23), um die Kühlungsmasseströmung zu steuern.

## Revendications

1. Système de compression de vapeur de frigorigène comprenant :
un circuit de frigorigène primaire incluant un dispositif de compression de frigorigène (20), un échangeur de chaleur à rejet de chaleur de frigorigène (40) en aval dudit dispositif de compression, un échangeur de chaleur à absorption de chaleur de frigorigène (50) en aval dudit échangeur de chaleur à rejet de chaleur de frigorigène, et un dispositif de détente primaire (55) disposé dans le circuit de frigorigène en aval dudit échangeur de chaleur à rejet de chaleur de frigorigène et en amont dudit échangeur de chaleur à absorption de chaleur de frigorigène ;
une ligne de dérivation de gaz chaud (24) établissant une communication de débit de vapeur de frigorigène entre un emplacement en amont par rapport à un débit de vapeur de frigorigène dudit échangeur de chaleur à rejet de chaleur de frigorigène et un emplacement en amont par rapport à un débit de frigorigène dudit échangeur de chaleur à absorption de chaleur de réfrigération et en aval dudit dispositif de détente primaire, ladite ligne de dérivation de gaz chaud contournant ledit échangeur de chaleur à rejet de chaleur de frigorigène et ledit dispositif de détente primaire ; et
un dispositif de commande de débit de vapeur de frigorigène (87) interposé dans ladite ligne de dérivation de gaz chaud, ledit dispositif de régulation de débit de frigorigène ayant au moins une première position ouverte dans laquelle un débit de vapeur de frigorigène peut passer à travers ladite ligne de dérivation de gaz chaud et une position fermée dans laquelle un débit de vapeur de frigorigène peut ne pas passer à travers ladite ligne de dérivation de gaz chaud,
**caractérisé en ce que** la ligne de dérivation de gaz chaud (24) débouche dans un étage intermédiaire du dispositif de compression (20) pour recevoir une vapeur de frigorigène du dispositif de compression à une pression intermédiaire entre la pression d'aspiration de dispositif de compression et une pression d'évacuation de dispositif de compression.

2. Système de compression de vapeur de frigorigène selon la revendication 1, dans lequel ledit dispositif de régulation de débit de frigorigène (87) comprend une vanne électromagnétique.

3. Système de compression de vapeur de frigorigène selon la revendication 1, dans lequel ledit dispositif de régulation de débit de frigorigène (87) comprend une vanne de détente.

4. Système de compression de vapeur de frigorigène selon la revendication 1, comprenant en outre une vanne de modulation d'aspiration (23) interposée dans ledit circuit de frigorigène en aval dudit échangeur de chaleur à absorption de chaleur de frigorigène (50) et en amont du dispositif de compression.

5. Système de compression de vapeur de frigorigène selon la revendication 1, dans lequel ledit système fonctionne dans un cycle transcritique.

6. Système de compression de vapeur de frigorigène selon la revendication 1, dans lequel le frigorigène comprend du dioxyde de carbone.

7. Système de compression de vapeur de frigorigène selon la revendication 1, dans lequel l'étage intermédiaire est situé entre un premier étage de compression indépendant (20a) et un second étage de compression indépendant (20b).

8. Système de compression de vapeur de frigorigène selon la revendication 1, comprenant en outre un régulateur (100) destiné à moduler le dispositif de régulation de débit de vapeur de frigorigène (87) pour faire sélectivement varier l'ouverture d'un passage de débit à travers ledit dispositif de régulation de débit de vapeur de frigorigène lors du fonctionnement dudit système de compression de vapeur de frigorigène dans l'un d'un mode de chauffage ou d'un mode de dégivrage.

9. Système de compression de vapeur de frigorigène selon la revendication 8, dans lequel ledit régulateur module ledit dispositif de régulation de débit de vapeur de frigorigène (87) pour faire sélectivement varier l'ouverture d'un passage de débit à travers ledit dispositif de régulation de débit de vapeur de réfrigération en réponse à une température de frigorigène d'évacuation de compresseur détectée.

10. Procédé de régulation de la capacité d'un système de compression de vapeur de frigorigène fonctionnant dans l'un d'un mode de chauffage et d'un mode de dégivrage, le système de compression de vapeur de frigorigène incluant un circuit de frigorigène ayant un dispositif de compression (20), un échangeur de chaleur à rejet de chaleur de frigorigène (40), et un échangeur de chaleur à absorption de chaleur de frigorigène (50) disposés dans une relation de débit de frigorigène en série, ledit procédé comprenant les étapes de :
contournement d'une vapeur de frigorigène à travers une ligne de dérivation (24) depuis un emplacement en amont de l'échangeur de chaleur à rejet de chaleur de frigorigène directement vers l'échangeur de chaleur à absorption de chaleur de frigorigène, dans lequel la ligne de dérivation (24) débouche dans un étage intermédiaire du dispositif de compression pour recevoir une vapeur de frigorigène du dispositif de compression à une pression intermédiaire entre une pression d'aspiration de dispositif de compression et une pression d'évacuation de dispositif de compression ;
disposition d'un dispositif de régulation de débit de vapeur de frigorigène (87) dans la ligne de dérivation ;
disposition d'une vanne de modulation d'aspiration (23) dans une ligne de frigorigène raccordant une sortie de frigorigène de l'échangeur de chaleur à absorption de chaleur de frigorigène en communication de débit de frigorigène avec une entrée d'aspiration du dispositif de compression ;
modulation sélective du débit de vapeur de frigorigène à travers le dispositif de régulation de débit de frigorigène ; et
modulation sélective de débit de frigorigène à travers la vanne de modulation d'aspiration.

11. Procédé selon la revendication 10, comprenant en outre les étapes de :
détection d'une pression de frigorigène d'évacuation de compresseur ;
modulation sélective du débit de vapeur de frigorigène à travers le dispositif de régulation de débit de frigorigène en réponse à la pression de frigorigène évacuée du compresseur détectée ; et
modulation sélective du débit de frigorigène à travers la vanne de modulation d'aspiration (23) pour réguler le débit massique de frigorigène.
